# EUROPEAN PATENT APPLICATION

(11) **EP 1 180 391 A2**
(43) Date of publication of application: **20.02.2002**
(21) Application number: 01307060.2
(22) Date of filing: 20.08.2001
(51) Int. Cl.: B01D 65/02, B01D 65/08, B01D 63/02, C02F 1/44

(54) **Filter device**

(30) Priority: 18.08.2000 JP 2000248294
(71) Applicant: SANYO ELECTRIC Co., Ltd., Moriguchi-shi, Osaka 570 (JP); Hanyu Sanyo Electronic Co. Ltd., Hanyu-shi, Saitama (JP)
(72) Inventor: Yamada, Yousuke, Funabashi-shi, Chiba (JP)
(74) Representative: Senior, Alan Murray

(57) **Abstract**

A filter device of a hollow fiber membrane type is prevented from being clogged. A filter cylinder is two-divided with a filter chamber on the upper side and a recovery chamber on the lower side by a funnel member. A hollow fiber membrane module is arranged in a state spread in a broom form within the filter chamber. Raw fluid is radially ejected through ejection ports of an injection pipe. Consequently, the hollow fiber membrane module positively spreads into a broom form while vibrating. Due to this, raw fluid sufficiently reaches an inside of the hollow fiber membrane module, thereby achieving efficient filtration and stripping away of deposit. The stripped deposit enters the recovery chamber. The deposit entered the recovery chamber does not return to the filter chamber. Thus, there is no re-deposition of the once-removed deposit onto the hollow fiber membrane module.

## Description

### BACKGROUND OF THE INVENTION

### 1. Field of the Invention

The present invention relates to a filter device which is devised, in a device for filtering using a hollow fiber membrane module by an external-pressure filtration method, to effectively remove the deposit put on a surface of the hollow fiber membrane module during filter operation, prevent removed deposit from being deposited again and further improve the efficiency of filtration.

### 2. Description of the Related Art

There is known a hollow fiber membrane as a medium for filtering liquid. The filtration using such a hollow fiber membrane makes it possible to produce super-pure water, sterilize service water, refine solvents and lubricating oils, recover the effective substance in a solvent, process or recover waste liquid or drain water and so on.

The filtration method using hollow fiber membranes include an external-pressure filtration method and an internal-pressure filtration method. In the filter device using hollow fiber membranes, a multiplicity of hollow fiber membranes are arranged within a housing case.

In the external-pressure filtration method, the hollow fiber membrane in a cylindrical form (straw form) at one end is sealed and at the other end is left open (the other end left as an exit end opening). The raw fluid under pressure is supplied toward the outer peripheral surfaces of the hollow fiber membranes. The raw fluid permeates at an outer peripheral surface toward the inner peripheral surface of the hollow fiber membrane, whereby dirt is filtered off while the fluid enters an inner space of the hollow fiber membranes. The filtrate fluid exits at the exit end opening. In such an external-pressure filtration method, the raw fluid all permeates through the hollow fiber membranes (permeates at an outer peripheral surface side toward the inner peripheral surface) during filtering. Consequently, the external-pressure filtration method is also called an entire filtration external-pressure method.

In the internal-pressure filtration method, the hollow fiber membrane in a cylindrical form (straw form) is left open at both of one and the other ends (one end as an inlet end opening and the other end as an exit end opening). Raw fluid under pressure is supplied through the inlet end opening into an inner space of the hollow fiber membranes, to be flowed out of the exit end opening. At this time, part of the raw fluid under pressure permeates the hollow fiber membrane from the inner peripheral surface to the outer peripheral surface side thereof while the filtrate fluid exits at the outer peripheral surface of the hollow fiber membrane. Particles (dirt) of the fluid flow in the inner space of the hollow fiber membrane without going out of the outer periphery of the hollow fiber membrane. In the internal-pressure filtration method, the raw fluid in part, instead of the entire, permeates through the hollow fiber membrane (permeates from the inner periphery to the outer periphery) during filtration.

In the meanwhile, in the case of adopting the external-pressure filtration method, because all the raw fluid permeates through the hollow fiber membrane, a great deal of deposit (dirt) is deposited on the outer peripheral surface of the hollow fiber membrane in a brief time. The dirt thus deposited causes clogging and hence lower the efficiency of filtration.

Accordingly, in the filter device for filtering using hollow fiber membrane by an external-pressure filtration method, it is a conventional practice to carry out recovering operation after ending a filter operation in order for recovering the hollow fiber membranes by removing the dirt deposited on the outer peripheral surfaces of the hollow fiber membranes.

That is, after stopping the filter operation, clean water or air is supplied at the outlet end opening of the hollow fiber membrane to the inner space of the hollow fiber membrane, to perform backwash (flushing) operation wherein the water or air is permeated from the inner peripheral surface to the outer peripheral surface thereby removing the dirt. The removed deposit is exited out of a housing case.

In the meanwhile, in the filter device for filtering using hollow fiber membranes by the external-pressure filtration method, filter operation must be temporarily shut down in order to remove deposit by the foregoing related art, thus lowering the efficiency of filter operation. Also, filter operation is impossible to continue for a long period of time.

Furthermore, although backwashing temporarily restores filter capability, if backwash operation is repeated many times each time clogging occurs, the filter capability cannot be restored to the initial state. This is because a great deal of deposit enters the inside of the hollow fiber membrane so that such deposit cannot be removed by mere backwash operation thus making it impossible to eliminate a clogging state.

Meanwhile, the related-art hollow fiber membrane module formed by bundling a multiplicity (several hundreds to several thousands) of hollow fiber membranes has been arranged within a cylindrical member somewhat greater in diameter than the diameter of the hollow fiber membrane module. Consequently, the hollow fiber membrane module stays in a bundled state without being spread out within the cylindrical member. Where such a hollow fiber membrane module arranged within a cylindrical member is used in filtration by the external-pressure filtration method, in many cases the hollow fiber membranes are in close contact with one another in the central region (inner region) of the hollow fiber membrane module and hence raw fluid is not liable to sufficiently reach. Consequently, in the related-art hollow fiber membrane module, filtering efficiency is high on the outer peripheral side but is lowered as the center is approached. Thus, the efficiency of filtration is under suppression as a whole.

### SUMMARY OF THE INVENTION

It is an object of the present invention to provide, in a filter device for filtering using a hollow fiber membrane module bundled with a multiplicity (several hundreds to several thousands) of hollow fiber membranes by an external-pressure filtration method, a filter device capable of removing the deposit put on a surface of a hollow fiber membrane module during filtering operation and preventing the removed deposit from depositing again on the surface of the hollow fiber membrane module thus being improved in filtering efficiency furthermore in view of the foregoing related art.

In order to solve the foregoing problem, according to the present invention, a filtering device comprises: a filter cylinder to be arranged vertical in an axial direction; a hollow fiber membrane module structured with a multiplicity of hollow fiber membranes bundled at upper ends and made free at lower ends, and arranged for spread into a broom form within the filter cylinder; and raw fluid injection means for ejecting raw fluid from a radial central position toward a radial outward of the hollow fiber membrane module thereby injecting raw fluid to an interior of the filter cylinder.

Also, the invention has a structure comprising: a filter cylinder to be arranged vertical in an axial direction; a funnel member made in a form narrowed in opening area in a downward direction and arranged within the filter cylinder, to define an interior of the filter cylinder with a filter chamber on an upper side and a recovery chamber on a lower side; a hollow fiber membrane module structured with a multiplicity of hollow fiber membranes bundled at upper ends and made free at lower ends, and arranged for spread into a broom form within the filter cylinder; and raw fluid injection means for ejecting raw fluid from a radial central position toward a radial outward of the hollow fiber membrane module thereby injecting raw fluid to an interior of the filter cylinder.

Also, the invention has a structure comprising: a filter cylinder to be arranged vertical in an axial direction; a funnel member made in a form narrowed in opening area in a downward direction and arranged within the filter cylinder, to define an interior of the filter cylinder with a filter chamber on an upper side and a recovery chamber on a lower side; a hollow fiber membrane module structured with a multiplicity of hollow fiber membranes bundled at upper ends and made free at lower ends, and arranged for spread into a broom form within the filter cylinder; raw fluid injection means for ejecting raw fluid from a radial central position toward a radial outward of the hollow fiber membrane module thereby injecting raw fluid to an interior of the filter cylinder; and a backwash camber formed on a top surface of the filter cylinder, to temporarily store filtrate fluid permeated through the hollow fiber membrane module and have a fluid pressure to be applied during backwashing.

Also, the invention has a structure, wherein the filter cylinder has an inner diameter of 1.5 to 3.0 times an upper end diameter of the hollow fiber membrane module.

Further, the raw fluid injection means is structured with an injection pipe penetrating a bottom surface of the filter cylinder and inserted through a lower end opening of the funnel member to structure an upper part inserted in a central position of the hollow fiber membrane module and ejection ports formed in the injection pipe at a part inserted in the hollow fiber membrane module.

Furthermore, the ejection ports are arranged between a one-third position from the upper end and a two-third position from the upper end with respect to a longitudinal direction of the hollow fiber membrane module.

Moreover, the raw fluid injection means injects raw fluid and bubbling air.

### BRIEF DESCRIPTION OF THE DRAWINGS

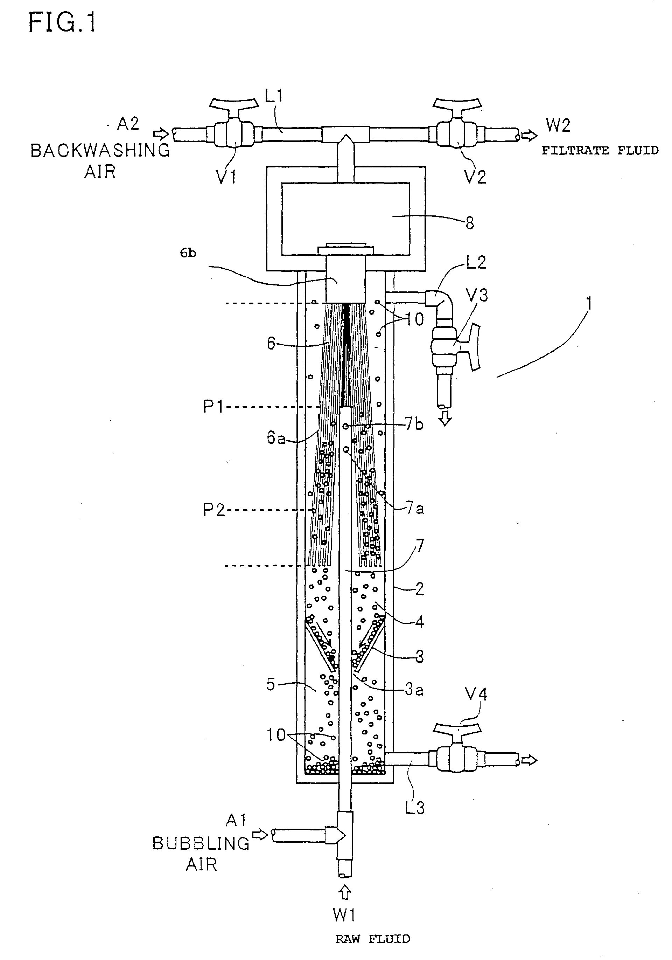

Fig. 1 is a structural view showing a filter device according to an embodiment of the present invention.

### DETAILED DESCRIPTION OF THE INVENTION

An embodiment of the present invention will be explained below with reference to the drawings.

Fig. 1 shows a filter device 1 according to an embodiment of the invention. A filter cylinder 2 of the filter device 1 is arranged (mounted, placed) vertical in a direction of its axis. A funnel member 3 is arranged within the filter cylinder 2. This funnel member 3 defines the interior space of the filter cylinder 2 with a filter chamber 4 on the upper side and a recovery chamber 5 on the lower side. The funnel member 3 is made in such a conical surface that the opening area thereof narrows in the downward direction, to form a lower-end opening 3a at the lower end. The filter chamber 4 is in communication with the recovery chamber 5 through the lower-end opening 3a.

Within the filter chamber 4, a hollow fiber membrane module 6 is arranged extending in the vertical direction. The hollow fiber membrane module 6 is structured with a multiplicity (several hundreds to several thousands) of hollow fiber membranes 6a restricted by bundling at the upper side by a holder 6b while made free at the lower side. Each straw-formed hollow fiber membranes 6a has a sealed lower end and an opened exit end opening.

The hollow fiber membrane module 6 is spread out into a broom form within the filter chamber 4 by pouring raw fluid W1 to the filter chamber 2. This is because the hollow fiber membranes 6a are bundled at the upper end but left free at the lower end. Furthermore, this is because the inner diameter of the filter cylinder 2 is given 1.5 to 3.0 times the upper-end diameter of the hollow fiber membrane module 6 thereby making a structure that the hollow fiber membrane module 6 is allowed to naturally spread out into a broom form within the filter chamber 2. Meanwhile, although the detail is described hereafter, such devising is provided that the hollow fiber membrane module 6 is positively spread into a broom form by ejecting raw fluid W1 from a radially central position of the hollow fiber membrane module 6 toward the radial outward thereof.

An injection pipe 7 axially extends penetrating through a bottom surface of the filter cylinder 2 and inserted, with a gap, through the lower-end opening 3a in the center of the funnel member 3, whereby the upper part thereof is inserted in a center position of the hollow fiber membrane module 6 (in a radial center position). Ejection ports 7a, 7b are formed in an inserted part of the injection pipe 7 to the hollow fiber membrane module 6. The ejection ports 7a, 7b are respectively formed in plurality (about four) in a circumferential direction. Moreover, the ejection ports 7a, 7b are arranged in positions between a one-third position P1 from the top end of the hollow fiber membrane module 6 and a two-third position P2 from the top end. Raw fluid W1, mixed with bubbling air A1, is delivered under pressure into the injection pipe 7, and radially ejected through the ejection ports 7a, 7b into the filter chamber 4.

A backwash chamber 8 is formed on the top surface of the filter cylinder 2. In this backwash chamber 8, the filtrate fluid W2 of raw fluid W1 thus filtered by the hollow fiber membrane module 6 is temporarily stored. This backwash chamber 8 is connected with a pipe L1 having a valve V1 and valve V2 interposed thereon.

A pipe L2 having a valve V3 interposed thereon is connected to an upper part of the filter chamber 4. A pipe L3 having a valve V4 interposed thereon is connected to an lower part of the recovery chamber 5.

In the filter device 1 structured as above, during filter operation the valves V2, V3 are turned to an open state and the valves V1, V4 to a closed state, to deliver raw fluid W1 and bubbling air A1 under pressure into the injection pipe 7. Thereupon, the raw fluid mixed with bubbling air A1 is radially ejected through the ejection ports 7a, 7b and injected into the filter chamber 4.

Injected and supplied with raw fluid W1, the filter chamber 4 and the recovery chamber 5 connecting with the filter chamber 4 are filled with raw fluid W1. Because the raw fluid W1 is under pressure, the raw fluid permeates the hollow fiber membranes 6a from an outer periphery to an inner periphery. The filtrate fluid W2 thus filtered of dirt enters an inner space of each hollow fiber membranes 6a. The filtrate fluid W2 is delivered from an exit end opening of the hollow fiber membrane module 6 to the backwash chamber 8 where it is temporarily reserved, thereafter being delivered to the pipe L1 and exited through the pipe L1. in this manner, filter operation is carried out. Incidentally, the bubbles caused by bubbling air A1 exits through the pipe L2.

In the filter operation process, the hollow fiber membrane module 6 is spread out in a broom form. Moreover, because raw fluid W1 is ejected from a radial central position of the hollow fiber membrane module 6 toward the radial outward thereof, the hollow fiber membrane module 6 is positively spread out in a broom form. This provides gaps at between individual hollow fiber membranes 6a forming the hollow fiber membrane module 6, to allow raw fluid W1 sufficiently enter an inner region (radial central region) of the hollow fiber membrane module 6. It is therefore possible to effectively make use of all the hollow fiber membranes 6a thoroughly from an outer peripheral region to a central region of the hollow fiber membrane module 6. This improves the efficiency of filtration.

Incidentally, if the ejection holes 7a, 7b are assumably positioned above the position P1, the hollow fiber membrane module 6 cannot be effectively spread out. Meanwhile, if they are positioned below the position P2, there is a fear that the hollow fiber membrane 6a be tucked up and tangled with one another. In the present embodiment, because the ejection ports 7a, 7b are positioned between the position P1 and the position P2, the hollow fiber membrane module 6 can be effectively spread out in a broom form.

Furthermore, because raw fluid W1 is ejected from the radial central position of the hollow fiber membrane module 6 toward the radial outward thereof, the hollow fiber membranes 6a can be fluttered continuously. In this manner, because the hollow fiber membranes 6a can be continuously fluttered and vibrated by the ejection stream of raw fluid W1, the deposit (dirt) 10 temporarily put on the outer peripheral surface of the hollow fiber membrane 6a can be stripped and removed out of the outer peripheral surface of the hollow fiber membrane 6a.

Meanwhile, the bubbles caused by bubbling air A1 can also be blown through the ejection ports 7a, 7b. In this manner, the floating up of the blown bubbles within the filter chamber 4 also causes vibration in the raw fluid W1 within the filter chamber 4. Such vibration also strips and removes the deposit (dirt) 10 temporarily put on the outer periphery of the hollow fiber membrane 6a.

In this manner, the deposit 10 put on the outer peripheral surface of the hollow fiber membrane 6a can be removed during filter operation. This can increase the time of filter operation, hence making possible to continuous filter operation for a long period of time.

The removed deposit 6 is heavier than raw fluid W1 and hence gradually precipitates due to a specific-gravity difference even where the raw fluid W1 is in turbulent flow within the filter chamber 4. The deposit 6 in precipitation moves downward along the funnel member 3 and further falls into the recovery chamber 5 through the lower-end opening 3a.

Because the recovery chamber 5 is partitioned from the filter chamber 4 in an area excepting the lower-end opening 3a, the raw fluid W1 within the recovery chamber 5 is not turbulent in flow but kept nearly in a standstill state. Due to this, the deposit 10 fallen within the recovery chamber 5 deposits on the bottom of the recovery chamber 5. Also, because the lower-end opening 3a is narrow, the deposit 10 entered in the recovery chamber 5 will not return to the filter chamber 4.

In this manner, because the deposit 10 removed and entered in the recovery chamber 5 will not return to the filter chamber 4, it is possible to prevent the removed deposit 10 from depositing again onto the outer peripheral surface of the hollow fiber membrane 6a.

When the filter operation is repeated and a great deal of deposit 10 accumulates in the recovery chamber 5, the supply of raw fluid W1 is once terminated. Then, the valve V4 is turned to an open state. Thereupon, the deposit 10 can be discharged together with the raw fluid W1 of the recovery chamber 5 to an outside through the pipe L3.

There is a case that deposit 10 accumulates on the surface of the hollow fiber membrane 6a by the repetition of filter operation. In such a case, the valves V2, V3 are turned to a close state and the valves V1, V4 are to an open state. Then, backwash air A2 is supplied to the backwash chamber 8. The clean filtrate fluid W2 reserved in the backwash chamber 8 is pressurized by the backwash air A2 and blown to the hollow fiber membrane module 6, thereby being blown from an inner peripheral surface toward the outer peripheral surface of the hollow fiber membrane 6a and hence backwashing them. Consequently, the deposit put on the hollow fiber membranes 6a is stripped off thereby eliminating a clogging state.

Because the hollow fiber membrane module 6 is continuously removed of deposit 10 even during filter operation, there is less amount of deposit put on the surface of the hollow fiber membranes 6a even in use over a long period of time. Accordingly, the filter capability can be nearly completely returned to the initial state by conducting backwash.

Incidentally, although the example of Fig. 1 is provided with the funnel member 3 to thereby define the interior of the filter cylinder 2 with the filter chamber 4 and the recovery chamber 5, the interior of the filter cylinder 2 can be remained as one chamber without the provision of the funnel member 3. In also this case, the hollow fiber membrane module 6 can be spread out into a broom form by the ejection of raw fluid W1, thereby improving filter efficiency. Furthermore, the deposit 10 can be stripped and removed away during filter operation by continuously fluttering the hollow fiber membranes 6a due to ejecting raw fluid W1.

According to the present invention, a hollow fiber membrane module may be immersed in a raw fluid tank (not shown in the drawing). In this case, in stead of the external-pressure filtration method, a negative pressure may be applied at the bundle 6b to suck the fluid. Further, the hollow fiber membrane module may be laterally arranged in the raw fluid tank. Furthermore, the recovery chamber may be omitted and whole of cylinder may be arranged laterally.

As concretely explained above with the embodiments, the present invention has a hollow fiber membrane module bundled at an upper end and made free at a lower end to be spread out into a broom form within the filter cylinder 2, so that raw fluid is ejected from a center of the hollow fiber membrane module toward a radial outward.

Consequently, the hollow fiber membrane module can be positively spread out into a broom form so that raw fluid can reach an inner part of the hollow fiber membrane module, thus improving filtering efficiency.

Meanwhile, because each hollow fiber membrane vibrates contacting the flow of raw fluid, the deposit once put on the hollow fiber membrane can be stripped away during filter operation. Thus, clogging due to deposit is prevented to make possible continuous filter operation for a long period of time.

Furthermore, because the funnel member defines the interior space of the filter cylinder with the filter chamber and the recovery chamber, the deposit recovered in the recovery chamber will not return to the filter chamber. Thus, the deposit recovered can be prevented from deposit again on the hollow fiber membrane module.

## Claims

1. A filter device comprising:
a hollow fiber membrane module structured with a multiplicity of hollow fiber membranes bundled together at their first ends and free at their second ends, and arranged to spread out into a broom-like form within fluid; and
means for ejecting a liquid or gas to be filtered from a central position in a generally radially direction of said hollow fiber membrane module so as to apply an agitation thereto.

2. A filter device according to claim 1 including:
a filter cylinder to be arranged in a certain direction with the hollow fiber membrane module located therein so that in use it spreads into a broom-like form within said filter cylinder; and the ejecting means ejects a raw fluid to the interior of said filter cylinder.

3. A filter device according to claim 2, wherein said filter cylinder is arranged with its axis vertical.

4. A filter device according to claim 1, 2 or 3 including a funnel member, disposed below said hollow fiber membrane module, and narrowing in a downward direction.

5. A filter device according to claim 2 or 3 including:
a funnel member made in a form narrowing in opening area in a direction away from the hollow fiber membrane module and arranged within said filter cylinder, to divide an interior of said filter cylinder into a filter chamber on an upper side and a recovery chamber on a lower side of the funnel member.

6. A filter device according to claim 5 including:
a backwash chamber formed on a top surface of said filter cylinder, to temporarily store filtrate fluid permeated through said hollow fiber membrane module and have a fluid pressure to be applied during backwashing.

7. A filter device according to any one of claims 2, 3, 5 or 6, wherein said filter cylinder has an inner diameter of 1.5 to 3.0 times the diameter of the bundled end of said hollow fiber membrane module.

8. A filter device according to any one of claims 5 or 6 wherein the fluid ejecting means is structured with an injection pipe penetrating a bottom surface of said filter cylinder and inserted through a lower end opening of said funnel member so as to define an upper part located in a central position of said hollow fiber membrane module and having ejection ports formed in said injection pipe at a part located in said hollow fiber membrane module.

9. A filter device according to claim 8, wherein said ejection ports are arranged within the central third of the length of said hollow fiber membrane module.

10. A filter device according to any preceding claim wherein said ejection means is a raw fluid injection means which includes means to inject air bubbles together with raw fluid.
